## Europäisches Patentamt
## European Patent Office
## Office européen des brevets

(11) Veröffentlichungsnummer: **0 177 636**
**B1**

(12) **EUROPÄISCHE PATENTSCHRIFT**

(45) Veröffentlichungstag der Patentschrift: **31.10.90**

(51) Int. Cl.⁵: **A 47 J 31/36**

(21) Anmeldenummer: **84113377.0**

(22) Anmeldetag: **06.11.84**

(54) Kaffeemaschine.

(30) Priorität: **11.10.84 CH 4873/84**

(43) Veröffentlichungstag der Anmeldung:
**16.04.86 Patentblatt 86/16**

(45) Bekanntmachung des Hinweises auf die Patenterteilung:
**31.10.90 Patentblatt 90/44**

(84) Benannte Vertragsstaaten:
**AT BE CH DE FR GB IT LI LU NL SE**

(56) Entgegenhaltungen:
**WO-A-82/01120**
**AT-A- 368 859**
**DE-A-2 327 259**
**FR-A-1 395 609**
**FR-A-2 226 137**

(73) Patentinhaber: **CAFAG AG**
**CH-6210 Sursee (CH)**

(72) Erfinder: **Rost, Kurt**
**Frieslirain**
**CH-6210 Sursee (CH)**
Erfinder: **Casty, Ueli**
**Mattenweg 10**
**CH-3084 Wabern - Bern (CH)**

(74) Vertreter: **Schaumburg, Thoenes & Englaender**
**Mauerkircherstrasse 31 Postfach 86 07 48**
**D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Kaffeemaschine, umfassend eine Brühkammer, zwei in die Brühkammer von entgegengesetzten Seiten her einschiebbare, unabhängig voneinander verstellbare Kolben, die einen Brühraum zur Aufnahme und zum Brühen einer vorbestimmten Kaffeepulvermenge zwischen sich begrenzen, eine Brühwasserquelle mit einem Durchlauferhitzer und einem Brühwasserdruckerzeuger und eine hydraulische Betätigungseinrichtung für die Kolben mit einem eine Druckmittelpumpe umfassenden Druckmittelkreislauf.

Eine solche Kaffeemaschine ist beispielsweise aus der CH-A-641 030 bekannt. Bei der in dieser Druckschrift beschriebenen Kaffeemaschine wird als Brühwasserdruckerzeuger eine eigene Brühwasserpumpe verwendet. Diese Lösung ist relativ aufwendig sowohl hinsichtlich der Gestehungskosten für die Kaffeemaschine als auch hinsichtlich des Raumbedarfes. Zudem unterliegen derartige Pumpen einem gewissen Verschleiß, insbesondere auch bei stark kalkhaltigem Wasser.

Die FR-A-1 395 609 zeigt bereits einen Brühwasserdruckerzeuger für eine Kaffeemaschine, der von einem Behälter mit zwei kalottenförmigen Halbschalen gebildet ist, die zwischen sich eine Wasserkammer von einer Druckmittelkammer trennende Membran einspannen. Dabei ist davon auszugehen, daß es sich hier um eine Membran handelt, die im druckfreien Zustand eben ist, da sie aufgrund ihrer Elastizität von den als Anschlagflächen dienenden halbkugelförmigen Kammerwänden abhebt. Dies führt dazu, daß beim Öffnen des Brühwasserventiles die Membran sofort großflächig von der die Druckmittelkammer begrenzenden halbkugelförmigen Wand abhebt und damit praktisch schlagartig das Wasser mit dem maximal möglichen Druck in die Brühkammer eingepreßt wird.

Der Erfindung ligt die Aufgabe zugrunde, eine Kaffeemaschine der eingangs genannten Art anzugeben, bei der das Brühwasser mit allmählich ansteigendem Druck in die Brühkammer eingepreßt werden kann.

Diese Aufgabe wird erfindungsgemäß dadurch gelöst, daß der Brühwasserdruckerzeuger von einem Behälter gebildet ist, umfassend eine in den Wasserzufluß zur Brühkammer eingeschaltete Wasserkammer und einem mit der Druckmittelpumpe verbindbare Druckmittelkammer, wobei der Behälter aus zwei halbkugelförmigen Schalen besteht, zwischen denen eine die Druckmittelkammer von der Wasserkammer trennende elastische Membran eingespannt ist, die derart geformt ist, daß sie im drucklosen Zustand an der Innenseite der die Druckmittelkammer begrenzenden Schale anliegt.

Beim Einströmen des Druckmittels in die Druckmittelkammer wird zunächst nur die Fläche wirksam, die dem Querschnitt der Eintrittsöffnung des Druckmittels entspricht. Mit dem Abheben der Membran von der Innenseite der die Druckmittelkammer umgebenden Behälterwand vergrößert sich die wirksame Druckfläche zunehmend, bis sie schließlich der gesamten von dem Druckmittel beaufschlagten Membranfläche entspricht. Dadurch tritt das Brühwasser nicht schlagartig mit dem maximal möglichen Druck sondern mit einem allmählich ansteigenden Druck in die Brühkammer ein. Es hat sich gezeigt, daß sich mit einem allmählich ansteigenden Druck des Brühwassers eine Qualitätsteigerung des gebrühten Kaffees erreichen läßt. Eine entsprechende Steuerung einer Brühwasserpumpe würde einen ungleich höheren Aufwand erfordern.

Das Entleeren der Druckmittelkammer und die Steuerung des Wasserzuflusses und des Wasserabflusses zu bzw. von der Wasserkammer des Medienwandlers bei Erhaltung einer guten Energiebilanz läßt sich auf einfache Weise dadurch erreichen, daß die Wasserkammer des Behälters stromaufwärts des Durchlauferhitzers an einen zwischen zwei Rückschlagventilen liegenden Abschnitt der Wasserzuflußleitung angeschlossen ist, wobei die Rückschlagventile derart angeordnet sind, daß bei Beaufschlagung der Druckmittelkammer des Behälters mit Druckmitteln das stromaufwärts der Wasserkammer gelegene Rückschlagventil geschlossen und das stromabwärts gelegene Rückschlagventil geöffnet werden, und daß in dem Druckmittel die Druckmittelpumpe und ein Wärmetauscher angeordnet sind, der von dem dem Durchlauferhitzer von der Wasserkammer des Behälters zufließenden Wasser durchströmt wird. Auf diese Weise wird einerseits die Druckmittelpumpe bzw. das Druckmittel gekühlt und andererseits das dem Durchlauferhitzer zuströmende Wasser vorgewärmt. Auf diese Weise läßt sich eine nicht unbeträhtliche Energieersparnis erreichen.

Die folgende Beschreibung erläutert in Verbindung mit den beigefügten Zeichnungen die Erfindung anhand eines Ausführungsbeispiels. Es zeigen:

Fig. 1 eine schematische Schaltskizze des Druckmittelkreislaufes und des Brühwasserflusses der erfindungsgemäßen Kaffeemaschine,

Fig. 2 eine detailliertere Schaltskizze der hydraulischen Betätigungseinrichtung der erfindungsgemäßen Kaffeemaschine und

Fig. 3 einen Querschnitt durch einen erfindungsgemäßen Medienwandler.

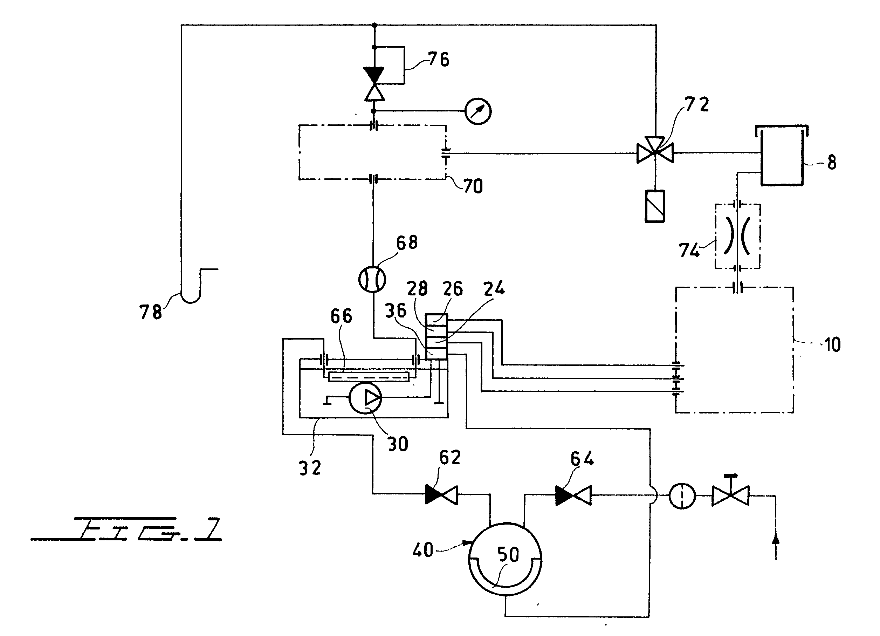

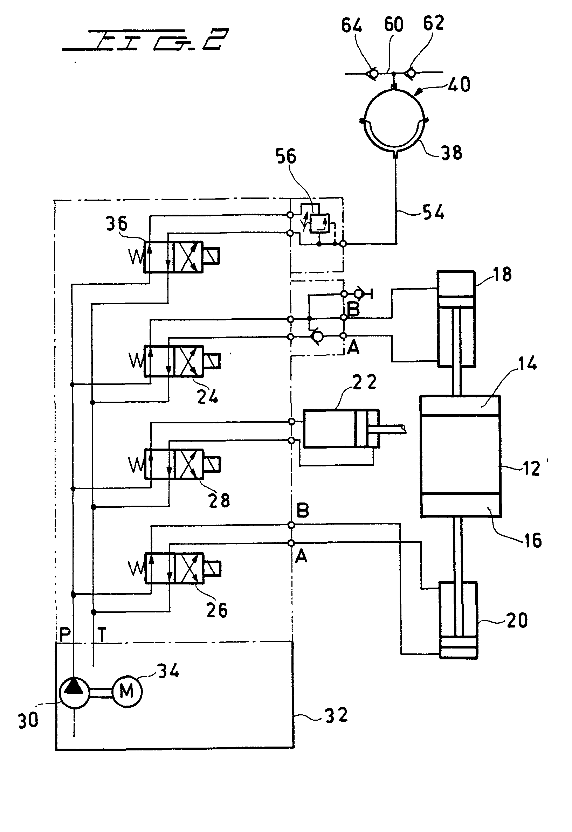

In Fig. 1 ist mit 10 allgemein ein Kolbenautomat einer Kaffeemaschine bezeichnet, wie er beispielsweise in der schweizer Patentschrift 641 030 beschrieben ist. Dieser Kolbenautomatist in einer sehr vereinfachten Darstellung in Fig. 2 angedeutet. Er umfaßt eine zylindrische Brühkammer 12, von deren entgegengesetzten axialen Enden her jeweils ein Kolben 14 bzw. 16 einschiebbar sind, wobei diese Kolben 14 und 16 jeweils durch einen Arbeitszylinder 18 bzw. 20 unabhängig voneinander verstellbar sind. Der Kolben 14 und der Kolben 16 schließen zwischen sich den Brühraum ein, in den durch den Kolben 14 das Brühwasser hineingeführt und aus dem durch den Kolben 16 der Kaffee abgeführt wird.

In Fig. 2 ist ferner noch ein weiterer Arbeitszylinder 22 dargestellt, der einen nicht dargestellten Schwenkarm betätigt, der den zu einer Tablette gepreßten und extrahierten Kaffeesatz aus der Brühkammer entnimmt und einem Abfallbehälter zuführt. Alle diese Funktionen sind in der CH-PS 641 030 ausführlich beschrieben, und brauchen daher hier nicht näher erläutert zu werden. Alle drei Arbeitszylinder 18, 20 und 22 sind jeweils über ein separat ansteuerbares Wegeventil 24, 26 bzw. 28 mit der Druckseite einer Druckmittelpumpe 30 bzw. einem Druckmitteltank 32 verbindbar. Die Druckmittelpumpe 30 ist in dem Druckmitteltank 32 angeordnet und wird mittels eines Elektromotors 34 angetrieben.

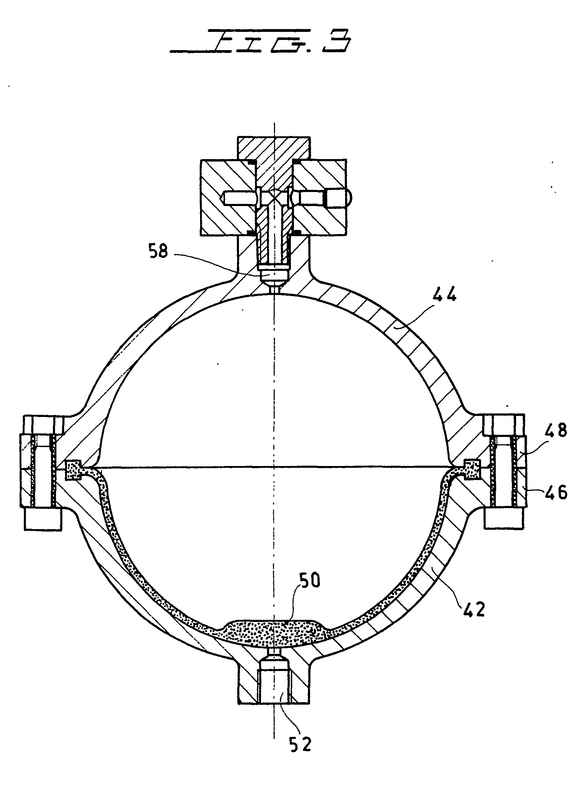

Der die Ventile 24 bis 28 umfassende Ventilblock enthält noch ein weiteres wahlweise ansteuerbares Wegeventil 36, über das die Druckseite der Pumpe 30 mit der Druckmittelseite 38 eines kugelförmigen Medienwandlers 40 verbindbar ist. Dieser Medienwandler besteht gemäß Fig. 3 aus zwei halbkugelförmigen Schalen 42 und 44, die mit ihren umlaufenden radialen Flanschen 46 bzw. 48 miteinander verschraubt sind und zwischen sich eine elastische Membran 50 einspannen, die im unbelasteten Zustand an der Innenseite der die Druckmittelkammer begrenzenden halbkugelförmigen Schale 42 anliegt, so wie dies in Fig. 3 dargestellt ist. Die halbkugelförmige Schale 42 des Medienwandlers 40 weist einen Druckmitteleinlaß 52 auf, der über eine Leitung 54 und ein zur Einstellung des Brühdruckes bestimmtes Druckreduzierventil 56 an das Wegeventil 36 angeschlossen ist.

Die Wasserkammer des Medienwandlers 40, die von der Membran 50 und der halbkugelförmigen Schale 44 des Medienwandlers begrenzt wird, ist über einen Durchflußkanal 58 an einen Abschnitt 60 der vom Wasserleitungsnetz zur Brühkammer 12 führenden Leitung angeschlossen, wobei dieser Abschnitt zwischen zwei Rückschlagventilen 62 und 64 liegt, die gleichsinnig derart geschaltet sind, daß bei Erzeugung des Brühdruckes das Rückschlagventil 64 zum Netz hin geschlossen wird, während das Rückschlagventil 62 zur Brühkammer 12 hin geöffnet wird. Dabei durchläuft das Brühwasser gemäß der Darstellung in Fig. 1 einen in dem Druckmitteltank 32 angeordneten Wärmetauscher 66, in dem das Brühwasser vorgewärmt wird. Es führt auf diese Weise die durch die verschiedenen Arbeitsprozesse und insbesondere durch die in dem Druckmitteltank 32 angeordnete Druckmittelpumpe 30 erzeugte Wärme ab. Nach dem Verlassen des Wärmetauschers 66 durchläuft das Brühwasser einen Volumenzähler 68, bevor es in einen Durchlauferhitzer 70 eintritt, aus dem es zu einem Wegeventil 72 strömt. Von diesem gelangt das Brühwasser über eine Drossel oder Blende 74 zur Bestimmung des Durchlaufwiderstandes in den Kolbenautomaten 10. Der Durchlauferhitzer 70 ist über ein Druckbegrenzungsventil 76 mit einem Ablauf 78 verbunden. Ferner ermöglicht das Wegeventil 72 eine Verbindung zwischen dem Kolbenautomaten 10 und dem Ablauf 78, wenn die Restfeuchtigkeit aus dem extrahierten Kaffeepulver ausgepreßt wird, um dieses mit einem möglichst geringen Feuchtigkeitsgehalt in den Abfallbehälter auswerfen zu können.

Schließlich erkennt man in Fig. 1 noch einen Behälter 80 für ein Reinigungsmittel, mit dem in bestimmten Abständen der Kolbenautomat 10 gereinigt wird.

Soll mit der erfindungsgemäßen Kaffeemaschine Kaffee zubereitet werden, so wird zunächst in an sich bekannter Weise eine bestimmte Menge Kaffee gemahlen und in die Brühkammer eingefüllt. Wenn die Brühkammer durch die Kolben 14 und 16 verschlossen ist, wird durch den Kolben 14 Brühwasser zugeführt. Dazu wird das Ventil 36 geöffnet, so daß Druckmittel durch den Druckmitteleinlaß 52 in die Druckmittelkammer des Medienwandlers 40 strömt. Wie man in der Fig. 3 erkennt, wirkt auf die Membran 50 zunächst nur eine Kraft, die dem Querschnitt des Druckmitteleinlasses 52 an der Membran 50 entspricht. Erst wenn die Membran 50 von der Innenwand der halbkugelförmigen Schale 52 abhebt, vergrößert sich die wirksame Druckfläche und nimmt schließlich bis auf die volle Querschnittsfläche des freien Abschnittes der eingespannten Membran 50 zu. Auf diese Weise wird das Brühwasser in dem Medienwandler nicht schlagartig mit vollem Druck, sondern allmählich mit einem progressiv ansteigenden Druck in die Brühkammer 12 des Kolbenautomaten 10 gepreßt. Dabei wird das stromaufwärts des Medienwandlers 40 angeordnete Rückschlagventil 64 geschlossen, während das stromabwärts des Medienwandlers 40 gelegene Rückschlagventil 62 geöffnet wird. Ist der Medienwandler vollständig entleert und wird die Druckmittelkammer des Medienwandlers 40 mit dem Druckmitteltank 32 verbunden, so strömt Wasser aus dem Wasserleitungsnetz in den Wasserraum des Medienwandlers 40 und drückt die Membran 50 wieder in die in der Fig. 3 dargestellte Stellung. Dabei ist das Rückschlagventil 62 geschlossen.

Die erfindungsgemäße Lösung ist preiswerter in der Herstellung, wirtschaftlicher im Betrieb und bedarf einer geringeren Wartung als die herkömmlichen Lösungen.

**Patentansprüche**

1. Kaffeemaschine, umfassend eine Brühkammer (12), zwei in die Brühkammer (12) von entgegengesetzten Seiten her einschiebbare, unabhängig voneinander verstellbare Kolben (14, 16), die einen Brühraum zur Aufnahme und zum Brühen einer vorbestimmten Kaffeepulvermenge zwischen sich begrenzen, eine Brühwasserquelle mit einem Durchlauferhitzer (70) und einem Brühwasserdruckerzeuger und eine hydraulische Betätigungseinrichtung für die Kolben (14, 16) mit einem eine Druckmittelpumpe (30) umfassenden Druckmittelkreislauf, dadurch gekennzeichnet, daß der Brühwasserdruckerzeuger von einem Behälter (42, 44) gebildet ist, umfassend eine in den Wasserzufluß zur Brühkammer (12) eingeschaltete Wasserkammer und eine mit der Druckmittelpumpe (30) verbindbare Druckmittelkammer, wobei der Behälter aus zwei halbkugelförmigen Schalen (42, 44) besteht, zwischen denen eine die Druckmittelkammer von der Wasserkammer trennende elastische Membran (50) eingespannt ist, die derart geformt ist, daß sie im drucklosen Zustand an der Innenseite der die Druckmittelkammer begrenzenden Schale (42) anliegt.

2. Kaffeemaschine nach Anspruch 1, dadurch gekennzeichnet, daß die Wasserkammer des Behälters (42, 44) stromaufwärts des Durchlauferhitzers (70) an einen zwischen zwei Rückschlagventilen (62, 64) liegenden Abschnitt (60) der Wasserzuflußleitung angeschlossen ist, wobei die Rückschlagventile (62, 64) derart angeordnet sind, daß bei Beaufschlagung der Druckmittelkammer des Behälters (40) mit Druckmittel, das stromaufwärts der Wasserkammer gelegene Rückschlagventil (64) geschlossen und das stromabwärts gelegene Rückschlagventil (62) geöffnet werden, und daß in dem Druckmittel (30) die Druckmittelpumpe (32) und ein Wärmetauscher (66) angeordnet sind, der von dem dem Durchlauferhitzer (70) von der Wasserkammer des Behälters (42, 44) zufließenden Wasser durchströmt wird.

## Revendications

1. Machine à café comprenant une chambre d'ébouillantage (12), deux pistons (14, 16) déplaçables indépendamment l'un de l'autre, introduisibles dans la chambre d'ébouillantage (12), à partir de côtés opposés l'un à l'autre, qui limitent entre eux un volume d'ébouillantage pour la réception et pour l'ébouillantage d'une quantité prédéterminée de poudre de café, une source d'eau bouillante avec un élément chauffant instantané (70) et un générateur de pression pour l'eau d'ébouillantage et un dispositif hydraulique de manoeuvre des pistons (14, 16) avec un circuit de fluide sous pression comprenant une pompe de fluide sous pression (30), caractérisée en ce que le générateur de pression pour l'eau d'ébouillantage est constitué par un réservoir (42, 44), comprenant une chambre d'eau raccordée à l'arrivée d'eau de la chambre d'ébouillantage (12), et une chambre de fluide sous pression pouvant être reliée à la pompe (30) de fluide sous pression, le réservoir se composant de deux coquilles hémisphériques (42, 44) entre lesquelles est tenue une membrane élastique (15) séparant la chambre de fluide sous pression de la chambre d'eau, qui est conformée de telle façon qu'à l'état sans pression, elle repose sur la face intérieure de la coquille (42) qui limite la chambre de fluide sous pression.

2. Machine à café selon la revendication 1 caractérisée en ce que la chambre d'eau du réservoir (42, 44) est raccordée, en amont de l'élément chauffant instantané (70), à un tronçon (60) de la conduite d'arrivée d'eau situé entre deux clapets anti-retour (62, 64) étant disposés de telle façon que, lors de l'alimentation en fluide sous pression de la chambre de fluide sous pression du réservoir (40), le clapet anti-retour (64) situé en amont de la chambre d'eau est fermé et le clapet anti-retour (62) situé en aval est ouvert, et en ce que sont disposés dans le fluide sous pression (30) la pompe de fluide sous pression (32) et un échangeur de chaleur (66), qui est parcouru par de l'eau allant à l'élément chauffant instantané (70) et venant de la chambre d'eau du réservoir (42, 44).

## Claims

1. A coffee machine comprising an infusion chamber (12), two independently displaceable pistons (14, 16) insertable into the infusion chamber (12) from opposite sides and bounding an infusion compartment for receiving and infusing a predetermined amount of powdered coffee, a source of boiling water comprising a continuous flow heater (70) and a boiling-water pressure generator and a hydraulic device for actuating the pistons (14, 16) comprising a pressure-medium circuit containing a pressure medium pump (30), characterised in that the boiling-water pressure generator is a container (42, 44) comprising a water chamber inserted into the flow of water to the infusion chamber (12) and a pressure-medium chamber for connecting to the pressure-medium pump (30), the container being made up of two hemispherical shells (42, 44) between which a resilient diaphragm (50) is clamped and divides the pressure-medium chamber from the water chamber, the diaphragm being so shaped that when not under pressure it abuts the inner side of the shell (42) bounding the pressure-medium chamber.

2. A coffee machine according to claim 1, characterised in that the water chamber of the container (42, 44) is connected upstream of the continuous flow heater (70) to a portion (60) of the water inflow line disposed between two nonreturn valves (62, 64), the valves (62, 64) being so disposed that when the pressure-medium chamber of the container (40) is supplied with pressure medium, the non-return valve (64) upstream of the water chamber is closed and the downstream non-return valve (62) is opened and the pressure-medium pump (32) and a heat exchanger (66) are disposed in the pressure medium (30) and are flowed through by the water flowing from the water chamber of the container (42, 44) to the continuous-flow heater (70).

FIG.1

FIG. 2

_FIG. 3_